# DEMANDE DE BREVET EUROPEEN

(11) **EP 0 716 965 A1**
(43) Date de publication de la demande: **19.06.1996**
(21) Numéro de dépôt: 95119445.5
(22) Date de dépôt: 08.12.1995
(51) Int. Cl.: B60S 1/34

(54) **Dispositif d'essuie-glace pour véhicule automobile muni d'un capot d'habillage**

(30) Priorité: 13.12.1994 FR 9415629
(71) Demandeur: VALEO SYSTEMES D'ESSUYAGE, 78321 La Verrière (FR)
(72) Inventeur: Berge, Gilles, F-78120 Rambouillet (FR); Estache, Jean-Pierre, F-92160 Antony (FR)
(74) Mandataire: Gamonal, Didier

(57) **Abrégé**

L'invention propose un dispositif d'essuie-glace pour un véhicule automobile du type comportant un bras d'essuie-glace (10) dont une extrémité est montée articulée autour d'un axe d'articulation (A1), entre une position de service et une position relevée, sur une tête d'entraînement (12) montée sur un arbre d'entraînement (14) en rotation autour d'un axe (A0) sensiblement perpendiculaire à l'axe d'articulation (A1), du type dans lequel un tronçon d'extrémité libre du bras (10) porte à rotation un balai d'essuie-glace (11), et du type comportant un capot (30) d'habillage au moins partiel du corps longitudinal du bras d'essuie-glace (10), caractérisé en ce que le capot d'habillage (30) enveloppe le tronçon d'extrémité libre (40) du bras (10) et en ce que le balai d'essuie-glace (11) est monté à rotation sur le capot d'habillage (30).

## Description

L'invention concerne un dispositif d'essuie-glace pour véhicule automobile muni d'un capot d'habillage.

L'invention concerne plus précisément un dispositif d'essuie-glace pour un véhicule automobile du type comportant un bras d'essuie-glace dont une extrémité est montée articulée autour d'un axe d'articulation, entre une position de service et une position relevée, sur une tête d'entraînement montée sur un arbre d'entraînement en rotation autour d'un axe sensiblement perpendiculaire à l'axe d'articulation, du type dans lequel un tronçon d'extrémité libre du bras porte un balai d'essuie-glace, et du type comportant un capot d'habillage au moins partiel du corps longitudinal du bras d'essuie-glace.

Il est connu d'utiliser un capot d'habillage qui recouvre au moins partiellement le bras du balai d'essuie-glace afin de mieux protéger les différents éléments articulés et afin de contribuer à une meilleur esthétique du bras d'essuie-glace.

Il a notamment été proposé dans le document FR-A-2.427.227 un dispositif d'essuie-glace muni d'un capot d'habillage articulé par l'une de ses extrémités sur la tête d'entraînement et monté coulissant par son autre extrémité sur le bras d'essuie-glace au niveau de son extrémité de jonction avec le carter.

Toutefois, ce dispositif laisse apparent le tronçon d'extrémité du bras et nécessite par ailleurs une pièce supplémentaire pour la fixation du balai d'essuie-glace sur le tronçon d'extrémité de la tige.

La présente invention a donc pour but de proposer un dispositif d'essuie-glace pour véhicule automobile dont le bras est muni d'un capot d'habillage qui le recouvre entièrement et qui ne nécessite pas de pièce supplémentaire pour la fixation du balai sur le bras.

Dans ce but, la présente invention propose donc un dispositif d'essuie-glace du type décrit précédemment caractérisé en ce que le capot d'habillage enveloppe le tronçon d'extrémité libre du bras et en ce que le balai d'essuie-glace est monté sur le capot d'habillage.

Selon d'autres caractéristiques de l'invention :
- le tronçon d'extrémité libre du bras est reçu dans un logement d'entraînement du capot d'habillage ;
- le capot d'habillage est articulé sur la tête d'entraînement, autour d'un axe parallèle à l'axe d'articulation, et le tronçon d'extrémité libre du bras coulisse longitudinalement dans le logement d'entraînement dans lequel il peut basculer autour d'un axe transversal parallèle à l'axe d'articulation, lorsque le bras d'essuie-glace pivote autour de son axe d'articulation ;
- le capot d'habillage présente, en section transversale, une forme général de U renversé et comporte une extrémité libre massive à l'intérieur de laquelle est agencé le logement d'entraînement et sur laquelle le balai d'essuie-glace est monté à rotation ;
- le tronçon d'extrémité libre du bras d'essuie-glace est une tige de section sensiblement rectangulaire qui prolonge longitudinalement un carter, à l'intérieur duquel est agencé un ressort de pression d'essuyage, et qui monté articulé sur la tête d'entraînement ;
- l'extrémité libre de la tige comporte deux faces latérales opposées qui coopèrent respectivement avec deux faces en vis-à-vis du logement d'entraînement pour le guidage et l'entraînement en balayage alterné du capot d'habillage ;
- l'extrémité libre de la tige comporte deux faces inférieure et supérieure qui coopèrent respectivement avec deux faces inférieure et supérieure du logement d'entraînement pour maintenir le capot d'habillage respectivement en position de service et en position relevée sous l'action du ressort ;
- le capot d'habillage est réalisé d'une seule pièce, notamment par moulage en matière plastique.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section axiale d'un dispositif d'essuie-glace pour véhicule automobile selon l'invention en position de relevée ;
- la figure 2 est une vue en section axiale d'un tel dispositif en position de service ;
- la figure 3 est une coupe transversale de l'extrémité libre d'un capot d'habillage selon l'invention suivant la ligne 3-3 de la figure 2 ;
- la figure 4 est une vue en section transversale du bras d'essuie-glace suivant la ligne 4-4 de la figure 2.

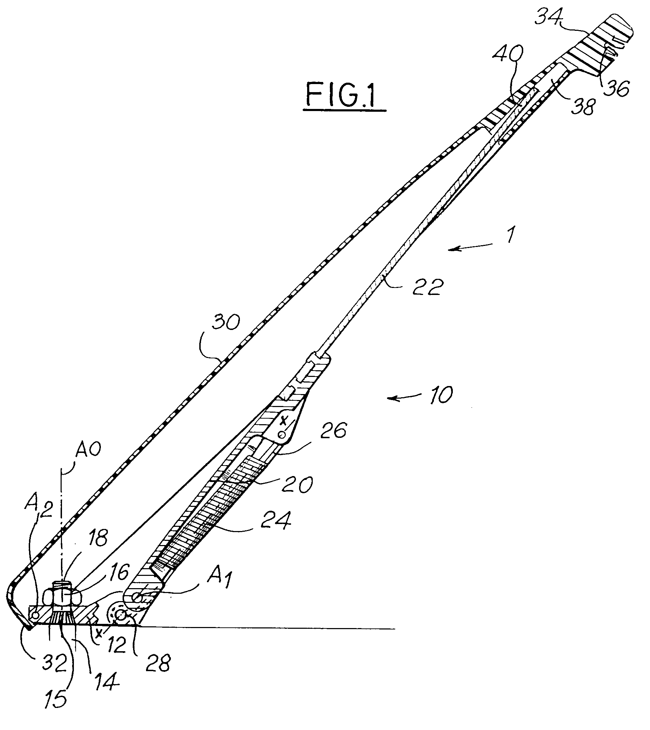

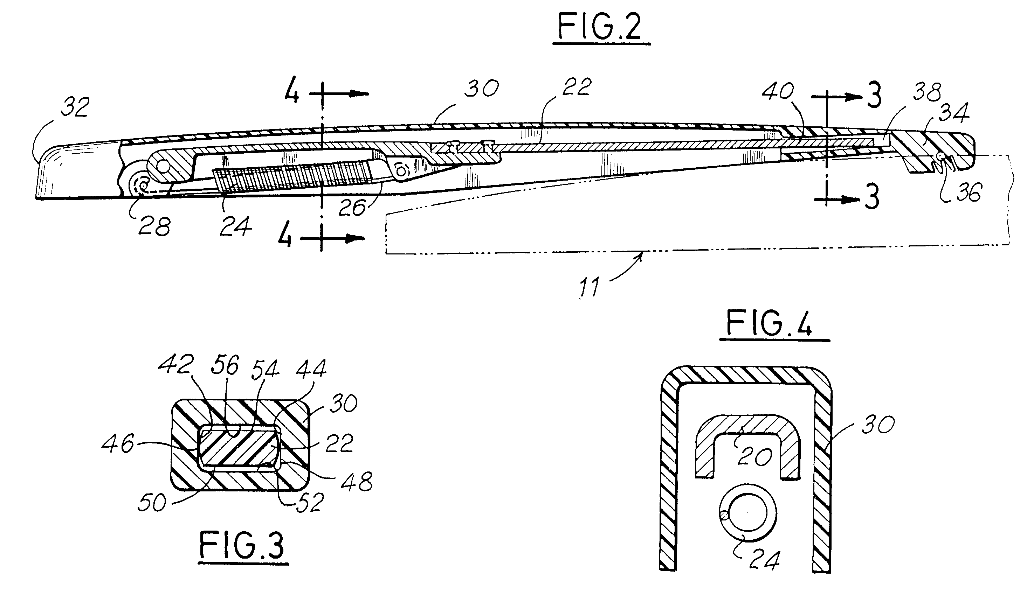

Sur les figures 1 et 2 sont représentés en section axiale un dispositif d'essuie-glace 10 selon l'invention.

Le dispositif d'essuie-glace comporte une tête d'entraînement 12 montée sur un arbre d'entraînement 14 qui en commande le mouvement de balayage alterné autour d'un axe A0.

La fixation de la tête d'entraînement 12 sur l'arbre d'entraînement 14 est assurée par des cannelures 15 et par un écrou 16 vissé sur l'extrémité 18 de l'arbre 14.

Un bras d'essuie-glace 1, formé d'un carter 20, allongé et prolongé longitudinalement par une tige 22, est articulé sur la tête d'entraînement 12 autour d'un axe A1 entre une position de service et une position relevée.

Comme représenté sur la figure 4, le carter 20 présente en section transversale une forme générale en U renversé à l'intérieur duquel est reçu un ressort de traction 24 qui est fixé par l'une de ses extrémités 26 au carter 20 et par son autre extrémité 28 à la tête d'entraînement 12, en arrière de l'axe d'articulation A1.

Le ressort 24 permet d'appliquer une pression d'essuyage suffisante sur le balai d'essuie-glace 11 en position de service. Le ressort 24 permet par ailleurs le maintien en position relevée du bras d'essuie-glace 10, lorsque la ligne d'action de la force exercée par le ressort 24, c'est-à-dire la ligne X-X passant par les deux extrémités d'accrochage de ce ressort, se situe au mieux en arrière du point d'articulation A1 ou au plus comme illustré sur la figure 2 sur cette articulation.

La tige 22 est fixée par l'une de ses extrémités au carter 20, notamment par sertissage. Elle présente en section transversale une forme sensiblement rectangulaire.

Le bras d'essuie-glace 10 selon l'invention est muni par ailleurs d'un capot d'habillage 30 allongé selon l'axe général du bras 10 qui, sauf en ses extrémités, présente une forme générale de U en section transversale ainsi que représenté à la figure 4.

En position de service, le capot d'habillage 30 recouvre entièrement la tête d'entraînement 12 et sa fixation sur l'arbre d'entraînement 14, le carter 20, le ressort 24 et la tige 22.

Le capot d'habillage 30 est monté pivotant autour d'un axe A2 sur la tête d'entraînement 12 par son extrémité 32.

Le capot d'habillage 30 comporte une deuxième extrémité 34 massive qui est munie de moyens de fixation 36 destinées à recevoir directement le balai d'essuie-glace 11 sans nécessiter de pièce intermédiaire supplémentaire.

L'extrémité 34 du capot d'habillage 30 est par ailleurs munie d'un logement borgne 38 orienté sensiblement selon l'axe longitudinal du bras d'essuie-glace 10 et destiné à recevoir le tronçon d'extrémité libre 40 de la tige 22.

Le logement 38 présente comme on peut le voir sur la figure 3 une forme rectangulaire en section transversale.

Cela correspond à une forme préférée de réalisation d'un capot d'habillage suivant l'invention, mais d'autres formes, notamment elliptiques sont envisageables.

Le tronçon d'extrémité libre 40 de la tige 22 peut coulisser axialement à l'intérieur du logement 38 et possède la possibilité de basculer, autour d'un axe transversal parallèle à l'axe d'articulation A1, par rapport à l'extrémité 34 du capot d'habillage 30.

Cette mobilité de la tige 22 par rapport au capot d'habillage 30 est nécessaire pour permettre le passage du bras d'essuie-glace 10 de la position de service à la position relevée.

En effet, le capot 30 et le bras d'essuie-glace 10 sont articulés sur la tête d'entraînement 12 respectivement autour des axes A2 et A1 qui sont sensiblement parallèles mais non confondus.

Il en résulte que l'extrémité libre 40 de la tige 22 et l'extrémité 34 du capot d'habillage 30 se déplacent tant longitudinalement qu'angulairement l'un par rapport à l'autre lorsque le bras d'essuie-glace 10 est amené de la position de service à la position relevée.

Au contraire, comme on peut le voir sur la figure 3, l'extrémité libre 40 de la tige 22 est bloquée transversalement dans le logement 38 du capot d'habillage 30 par la coopération des surfaces latérales respectives 42, 44 et 46, 48 du logement 38 et de la tige 22.

La tige 22, qui est animée d'un mouvement de balayage alterné sous l'action de l'arbre moteur 14, peut transmettre son mouvement au capot d'habillage 30 et donc au balai d'essuie-glace 11 qui est monté à rotation sur le capot 30.

En position de service, le balai d'essuie-glace 11 est maintenu en pression contre la vitre (non représentée) du véhicule par le ressort 24 dont l'action est transmise au capot 30 par la coopération de la surface inférieure 50 de la tige 22 avec la surface inférieure 52 du logement 38.

De la même manière, l'ensemble du dispositif d'essuyage est maintenu en position relevée par la coopération de la surface supérieure 54 de la tige 22 avec la surface supérieure en vis-à-vis 56 du logement 38.

Un bras d'essuie-glace 10 selon cette conception présente l'avantage d'avoir en position de service l'apparence d'une pièce unique et évite ainsi toute discontinuité de forme nuisible à l'esthétique.

Par ailleurs, la forme extérieure du capot d'habillage 30 peut être adaptée en vue de fonctions particulières. Elle peut notamment être conçue de manière à obtenir un effet d'appui aérodynamique du dispositif d'essuyage destiné à lutter contre le décollement du balai lorsque le véhicule se déplace à grande vitesse.

On peut aussi prévoir de disposer à l'intérieur du capot d'habillage 30 un tuyau d'alimentation d'une rampe d'arrosage montée sur le balai 11.

## Revendications

1. Dispositif d'essuie-glace pour un véhicule automobile du type comportant un bras d'essuie-glace (10) dont une extrémité est montée articulée autour d'un axe d'articulation (A1), entre une position de service et une position relevée, sur une tête d'entraînement (12) montée sur un arbre d'entraînement (14) en rotation autour d'un axe (A0) sensiblement perpendiculaire à l'axe d'articulation (A1), du type dans lequel un tronçon d'extrémité libre du bras (10) porte un balai d'essuie-glace (11), et du type comportant un capot (30) d'habillage au moins partiel du corps longitudinal du bras d'essuie-glace (10), caractérisé en ce que le capot d'habillage (30) enveloppe le tronçon d'extrémité libre (40) du bras (10) et en ce que le balai d'essuie-glace (11) est monté sur le capot d'habillage (30).

2. Dispositif selon la revendication 1, caractérisé en ce que le tronçon d'extrémité libre (40) du bras est reçu dans un logement d'entraînement (38) du capot d'habillage (30).

3. Dispositif selon la revendication 2, caractérisé en ce que le capot d'habillage (30) est articulé sur la tête d'entraînement (12), autour d'un axe (A2) parallèle à l'axe d'articulation (A1), et en ce que le tronçon d'extrémité libre (40) du bras (10) coulisse longitudinalement dans le logement d'entraînement (38) dans lequel il peut basculer autour d'un axe transversal parallèle à l'axe d'articulation (A1), lorsque le bras d'essuie-glace pivote autour de son axe d'articulation.

4. Dispositif selon la revendication 3, caractérisé en ce que le capot d'habillage (30) présente, en section transversale, une forme générale de U renversé et comporte une extrémité libre massive (34) à l'intérieur de laquelle est agencé le logement d'entraînement (38) et sur laquelle le balai d'essuie-glace (11) est monté à rotation.

5. Dispositif selon la revendication 4, caractérisé en ce que le tronçon d'extrémité libre (40) du bras d'essuie-glace (10) est une tige (22) de section sensiblement rectangulaire qui prolonge longitudinalement un carter (20), à l'intérieur duquel est agencé un ressort (24) de pression d'essuyage, et qui est monté articulé sur la tête d'entraînement.

6. Dispositif d'essuie-glace selon la revendication 5, caractérisé en ce que l'extrémité libre (40) de la tige (22) comporte deux faces latérales opposées (46, 48) qui coopèrent respectivement avec deux faces (42, 44) en vis-à-vis du logement d'entraînement (38) pour le guidage et l'entraînement en balayage alterné du capot d'habillage (30).

7. Dispositif d'essuie-glace selon la revendication 6, caractérisé en ce que l'extrémité libre (40) de la tige (22) comporte deux faces inférieure (50) et supérieure (54) qui coopèrent respectivement avec deux faces inférieure (52) et supérieure (56) du logement d'entraînement (38) pour maintenir le capot d'habillage (30) respectivement en position de service et en position relevée sous l'action du ressort (24).

8. Dispositif d'essuie-glace selon l'une quelconque des revendications précédentes, caractérisé en ce que le capot d'habillage (30) est réalisé d'une seule pièce, notamment par moulage en matière plastique.
